# EUROPEAN PATENT APPLICATION

(11) **EP 3 543 123 A1**
(43) Date of publication of application: **25.09.2019**
(21) Application number: 18163751.3
(22) Date of filing: 23.03.2018
(51) Int. Cl.: B64D 11/06, B60N 2/02, B60N 2/18, B60N 2/34

(54) **A SEAT FOR AN AIRCRAFT**

(71) Applicant: Adient Aerospace LLC, Kirkland, WA 98033 (US)
(72) Inventor: MUELLER, Andreas, 67659 Kaiserslautern (DE)
(74) Representative: Liedtke & Partner Patentanwälte

(57) **Abstract**

The invention relates to a seat (1), in particular an aircraft seat, comprising at least a seat support structure (5) mounted to a track assembly (8),
- the track assembly (8) is configured to adjust the seat support structure (5) in a longitudinal direction,
the seat support structure (5) comprises at least one of
- a seat pan (2) having a seat pan frame (5.1) which is pivotable mounted to the track assembly (8) at a seat pan pivot axis (PA4),
- a backrest (3) having a backrest frame (5.2) which is pivotable mounted to the seat pan frame (5.1) at a backrest pivot axis (PA1), wherein the seat pan frame (5.1) is being inclined about the seat pan pivot axis (PA4) as the backrest frame (5.2) pivots about the backrest pivot axis (PA1), and
- the seat pan frame (5.1) and the backrest pivot axis (PA1) are being adjusted relatively with respect to the track assembly (8). Further, the invention relates to a seat (1), wherein a coupling mechanism (CM) is configured to initiate a pivot movement (M2) in both rotation directions with a reversion of rotation directions as the seat support structure (5) moves from a taxi, takeoff and landing position (P1) to at least one of an inclined comfort position (P2) and a sleeping position (P3) or vice versa.

## Description

### FIELD OF INVENTION

The invention relates to a seat for a vehicle; in particular to an aircraft passenger seat.

### DESCRIPTION OF THE RELATED ART

There are a wide variety of vehicle seats, in particular aircraft passenger seat known in the prior art.

WO2007/132216 A1, DE 197 24 763 A1, DE 34 01 469 A1, each of them describes a seat having a seat pan and a backrest, wherein the seat pan and the backrest are coupled by a connecting mechanism.

### SUMMARY OF THE INVENTION

It is an object of the present invention to provide an improved seat for a vehicle, in particular an aircraft. In particular, it is an object of the present invention to improve the seat to bring the seat into one or more positions, e.g. into a taxi, take-off and landing position (also termed as "TTL" or "TT&L" position), an inclined position or a sleeping position.

The object is achieved by a seat according to claim 1. Further, the object is achieved by a seat according to claim 3.

Preferred embodiments of the invention are given in the dependent claims.

According to the disclosure, a seat, in particular vehicle seat, such as an aircraft passenger seat, comprises at least:
- a seat support structure mounted to a track assembly,
- the track assembly is configured to adjust the seat support structure in a longitudinal direction, particularly of the vehicle,
- the seat support structure comprises at least one of
- a seat pan having a seat pan frame which is pivotable mounted to the track assembly at a seat pan pivot axis,
- a backrest having a backrest frame which is pivotable mounted to the seat pan frame at a backrest pivot axis, and
- a seat adjustment configuration for adjusting at least one of the seat pan, the backrest and the track assembly,
wherein the adjustment configuration comprises a coupling mechanism configured to link the seat pan frame and the backrest frame with respect to each other, and at least a backrest pivot fitting mounted at the backrest pivot axis, wherein the backrest pivot fitting is configured to interact with the coupling mechanism such that
- the seat pan frame is being inclined, particularly mechanically, about the seat pan pivot axis as the backrest frame pivots about the backrest pivot axis, and whereas
- the seat pan frame and the backrest pivot fitting, particularly the backrest pivot axis, are being adjusted relatively with respect to the track assembly.

In particular, the adjustment configuration, such as a mechanism and/or device, is arranged between the seat support structure and the track assembly and creates a kinematic linkage system, particularly a substantially mechanical linkage system. Thereby, the kinematic linkage system is provided between the backrest pivot fitting, particularly pivot axis, and the seat pan frame. For example, the linkage system comprises linkage elements, such as linkage bars, rods, fittings or other hinge connection elements. Moreover, the coupling mechanism is configured to synchronize a pivot movement of the backrest frame and a pivot movement of the seat pan frame as the backrest frame moves into one or more inclined positions of the seat. Exemplarily, the track assembly moves the seat in a given length area forward or rearward with respect to the longitudinal direction, whereas within this given length area, the backrest and the seat pan are being inclined, each in a given angle area. Conversely, when the backrest is desired to be inclined, e.g. by a passenger, the inclination of the seat pan is initiated so as substantially simultaneously the length adjustment of the track assembly. For example, the length adjustment device and an electric-driven adjusting device of the backrest frame are synchronized and simultaneously actuatable by software. Further, the coupling mechanism is configured to mechanically support the pivot movement, particularly inclination of the seat pan frame. For example, the seat pan frame can be moved substantially simultaneously relative to the backrest frame without usage of an additional electric driven adjustment device. In particular, the seat according to the present invention is cost-efficient whilst ensuring a comparatively light weight assembly by using a reduced number of adjustment devices, such as motor drive units for adjustment of the vehicle seat.

Further, the seat pan frame and the backrest frame can be both inclined with respect to their pivot axis substantially simultaneously with a longitudinal adjustment of the track assembly. Thereby, the seat support structure is moved to a length position of the seat, whereas the inclination of the seat pan frame and the backrest frame is initiated substantially concurrent. This ensures a fluent motion of the seat adjustment from one position to one or more different positions. Moreover, a range of the length adjustment of the seat support structure is adapted to a range of the pivot movement at least of the backrest frame. For example, the seat support structure is moved forward in a given length area to provide a space or a gap in a rear of the seat, such that the backrest frame does not collide with another seating unit or vehicle structure behind. Conversely, the seat support structure is moved backward in a given length area to reduce the space or the gap while the backrest moves from an inclined or sleeping position to an upright position. Additionally, the backward movement of the seat support structure ensures an access passenger path in front of the seat. In other words: Each of the backrest frame, the seat pan frame and the track assembly move relatively to one another, substantially simultaneously, from a first position to a second position and vice versa.

According to a further embodiment of the seat, the seat adjustment configuration is configured in such a manner that, when inclination of the backrest frame is being adjusted, particularly in a given angle area, the inclination of the seat pan frame, in particular in a given angle area, and the backrest pivot axis are being adjusted in one of a given length area and vertical or height area relatively with respect to the track assembly. The backrest pivot axis is enabled to move in a vertical direction away or towards the track assembly during pivot movement of the backrest frame and the seat pan frame, when being adjusted from one position to another position. Thereby, the seat support structure can be brought into a substantially horizontal, sleeping position, whereas the backrest frame and the seat pan frame align substantially horizontally with each other. In particular, while inclination of the seat pan frame about the seat pan pivot axis is performed, the backrest pivot fitting, in particular its pivot axis, is movable in a downward and upward movement (vertical, height area) relative to the track assembly. Moreover, the backrest pivot axis is tilted by a pivot movement of the seat pan relatively with respect to the track assembly. In particular, the back seat pan side of the seat pan frame is tilted in a downward direction with respect to the track assembly and afterwards in a more upward direction till the backrest frame and the seat pan frame, and additionally the leg-rest frame, are being aligned in a horizontal manner providing a flat, horizontal sleeping surface.

A correlation of a backrest frame angle and a seat pan frame angle depends on a design of the coupling mechanism.

According to another aspect of the disclosure, a seat, in particular an aircraft passenger seat, comprises at least:
- a track assembly configured to adjust a length position of the seat,
- a seat pan having a seat pan frame which is pivotable mounted to the track assembly at a seat pan pivot axis,
- a backrest having a backrest frame which is pivotable mounted to the seat pan frame at a backrest pivot axis,
- a seat adjustment configuration for adjusting at least the seat pan, the backrest and/or the track assembly,
   wherein the adjustment configuration comprises at least a backrest fitting mounted at the backrest pivot axis and a coupling mechanism configured to link the seat pan frame and the backrest frame with respect to each other, wherein the adjustment configuration is configured in such a manner that, during positioning of the seat from a taxi, takeoff and landing position (shortly termed as TTL position) through an inclined comfort position into a sleeping position or vice versa, the seat pan frame is being rotated in both rotation directions with rotation direction reversion. In particular, the coupling mechanism is configured to initiate a pivot movement in both rotation directions with a reversion of rotation directions as the seat support structure moves from a taxi, takeoff and landing position to at least one of an inclined comfort position and a sleeping position or vice versa.

The above and below mentioned aspects of the invention allow a low number of power drive units as well as pivot fittings in comparison with well-known adjustable seats. Furthermore, the invention reduces the weight of the seat. Additionally, adjustment movement of the seat from the TTL position through the inclined comfort position into the bed or sleeping position may be performed in a comfortable manner.

The taxi, takeoff and landing position of the seat is a position in which the backrest is in a substantial upright position with respect to the seat pan and/or the base. In particular, the backrest is in a position with an angle with respect to a vertical axis of about 3° to 12°. The leg-rest is in a position with an angle with respect to the vertical axis of about 0° or less than 0°, for example -3° to -10°.

The inclined comfort position of the seat is a substantial inclined position in which the backrest and/or the leg-rest are in a substantial inclined position. In particular, the backrest is in a position with an angle with respect to the vertical axis of about more than 12° and less than 90°. The leg-rest is in a position with an angle with respect to the vertical axis of about more than 0° and less than 85°.

The sleeping position of the seat is a position in which the backrest and/or the leg-rest are in a substantial inclined position. In particular, the backrest is in a position with an angle with respect to the vertical axis of about 90°, in particular between 85° and 95°. The leg-rest is in a position with an angle with respect to the vertical axis of about 45°, in particular between 40° and 50°.

In an exemplary embodiment, the seat pan pivot axis extends as horizontal transverse axis with respect to the seat. Furthermore, the seat pan pivot axis may be fixed. In particular, the seat pan frame is pivotable mounted to the track assembly by a pivot bearing having a fixed seat pan pivot axis. Thereby, the adjustment configuration comprises a mechanical track linkage coupling the seat pan frame with the pivot bearing, such as a mounting and support structure, whereas the pivot bearing is fixed to the track assembly. For example, the mechanical linkage comprises linkage elements, such as bars, rods or other hinge elements.

According a further exemplary embodiment, each end portion of the mechanical track linkage is pivotable coupled to one of the seat pan frame and to the track assembly. For example, the seat pan frame is mechanically coupled to an upper track of the track assembly which is slidable fixed to a lower track of the track assembly. In particular, the seat pan frame is coupled via the mechanical track linkage to the upper track. Additionally or optionally, the mechanical track linkage is pivotable fixed to the seat pan frame and to the pivot bearing which is fixed to the upper track assembly. Exemplarily, each of the end portions can be pivotable fixed by hinge elements. Additionally or optionally, each of the end portions can be pivotable fixed by means of brackets, such as hinge brackets. Moreover, the mechanical track linkage can be configured as a stable support between the seat support structure and the track assembly whilst being allowed to compensate a weight-force of the passenger during adjustment of the seat.

In another embodiment of the seat, the coupling mechanism comprises a mechanical backrest linkage configured to mechanically couple the seat pan frame via the mechanical track linkage with respect to the backrest pivot axis, particularly the backrest pivot fitting. For example, the backrest pivot fitting comprises a pivot extension which provides a second pivot axis of the backrest. The pivot extension is movable fixed to the backrest pivot fitting so as to the backrest pivot axis, whereas the pivot extension is linked with the seat pan frame. For example, the pivot movement of the backrest initiates the pivot extension to be moved relatively with respect to the pivot fitting, such that the mechanical backrest linkage is moved as well. Thereby, the pivot movement of the seat pan frame is caused by a pushing or pulling force of the pivot extension about a circular path of the backrest pivot axis. For example, the pivot extension is configured as a bracket which is connected to the backrest pivot fitting. The bracket provides a pivot link. Thereby, the bracket can be coupled to the mechanical track linkage by an intermediate link.

In particular, the coupling mechanism comprises one or more hinge connections. By the mechanical linkage coupling the backrest and the seat pan, the seat pan moves with the backrest as the backrest inclination is adjusted. For example, if the backrest is reclined from the TTL position into the inclined comfort position in a given angle area, e.g. backwards, the seat pan is pivoted with its front seat pan end upwards and with its rear seat pan end downwards.

In an exemplary embodiment, the adjustment configuration comprises a backrest fitting configured as an electric-powered continuously adjustable fitting. In particular, the backrest frame comprises a single electric-powered continuously adjustable fitting on each of its lateral backrest sides. For instance, the fittings are driven by a single power drive unit, e.g. an electric motor. In an exemplary embodiment, the power drive unit is provided to actuate the pivot fittings. The powered continuously adjustable fitting comprises an electric motor acting through a gearbox on a transmission rod which may be rotationally fixed to one of the articulated legs while being rotatable with respect to the other one, to which the motor and gearbox may be rotationally fixed. The gearbox is adapted to engage a profiled first section of the transmission rod, wherein the first section may have a toothed, square, hexagonal or otherwise non-circular cross section corresponding to a cross section of a driven gear of the gearbox such that rotation of the motor and gearbox causes rotation of the transmission rod and thus an adjustment movement of the powered continuously adjustable fitting. The transmission rod comprises a second section which is not profiled, e.g. has a circular cross section, or which is profiled in a way not corresponding to the cross section of the driven gear of the gearbox such that, when the motor and gearbox are moved along the axis of the transmission rod away from the first section to the second section, the gearbox disengages the transmission rod such that the gearbox and the transmission rod can rotate independently.

In an exemplary embodiment, the adjustment configuration comprises at least one transmission rod coupling the two pivot fittings of the lateral backrest sides. In particular, the adjustment configuration is configured to continuously adjust the transmission rod to synchronously drive the pivot fittings and adjust the inclination of the backrest.

In an exemplary embodiment, the adjustment configuration comprises a length adjustment configured as an electric-powered continuously adjustable length adjustment, in particular driven by a power drive unit, e.g. an electric motor. In an exemplary embodiment, the length adjustment comprising the power drive unit is provided to unlock and actuate the track assembly, in particular an upper track connected with the seat to adjust the length position of the seat relatively to a lower track.

In an exemplary embodiment, the track assembly comprises a length adjustment device configured as an electric-powered continuously length adjustable device. For example, the length adjustment device and at least the backrest pivot fitting, such as an electric-powered continuously driven pivot fitting, are configured to simultaneously adjust the backrest and a length position of the seat support structure. In particular, the length adjustment device comprises a drive unit which is configured to adjust a longitudinal movement of the upper track substantially simultaneously as the backrest pivot fitting starts to adjust an inclination of the backrest. Therefore, the drive unit of the track assembly and a drive unit of the backrest pivot fitting can be pre-combined and pre-adjusted, particularly previously programmed, such that both drive units are enabled to simultaneously move the upper track and the backrest.

In an exemplary embodiment, the adjustment configuration is configured in such a manner that, when the length position of the seat is being adjusted in a given area, the inclination of the seat pan frame, in particular in a given angle area is being adjusted.

In an exemplary embodiment, a leg-rest having a leg-rest frame is pivotable mounted to the seat pan frame at a leg-rest pivot axis. Particularly, the leg-rest frame is mounted to a front seat pan side, whereas the backrest frame is mounted to a back seat pan side. Further, the seat comprises at least one adjusting device for adjusting at least the seat pan, the backrest and the leg-rest with respect to each other such that the seat is positionable into at least one of the TTL position, the inclined comfort position and the sleeping position by the adjusting device. The adjusting device comprises at least one pivot fitting which is configured as an electric-powered continuously adjustable fitting capable of adjusting an inclination between two seat parts.

In an exemplary embodiment, the leg-rest is pivotable by a leg-rest pivot fitting configured as an electric-powered continuously adjustable fitting, in particular driven by a power drive unit, e.g. an electric motor.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
Figure 1 is a schematic side view of a seat, particularly of a vehicle seat, such as an aircraft seat,
Figure 2 is a schematic side view of an embodiment of the seat comprising a track assembly and a seat adjustment configuration,
Figure 3 is a side view of a further embodiment of the track assembly and the seat adjustment configuration and
Figures 4A to 4C are each a side view of a further embodiment of the seat in a different position.

Corresponding parts are marked with the same reference symbols in all figures.

### DETAILED DESCRIPTION OF PREFERRED EMBODIMENTS

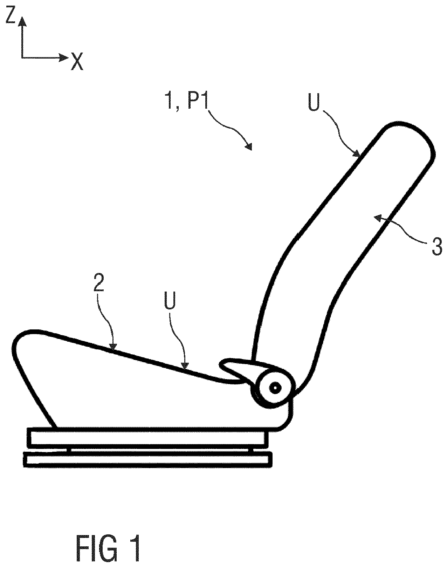

**The** **figure 1** shows a schematic side view of an embodiment of a seat 1 for a not further shown vehicle, in particular for an aircraft or any other passenger carrying vehicle. The seat 1 is shown in a taxi, takeoff, and landing position, which is further termed as TTL position P1. Further, the seat 1 is shown with an upholstery U for a seat pan 2 and a backrest 3 of the seat 1.

For a better understanding of subsequent descriptions of the seat 1 a coordinate system is shown in further figures. The coordinate system comprises a longitudinal axis x, a transverse axis y and a vertical axis z in relation to the aircraft.

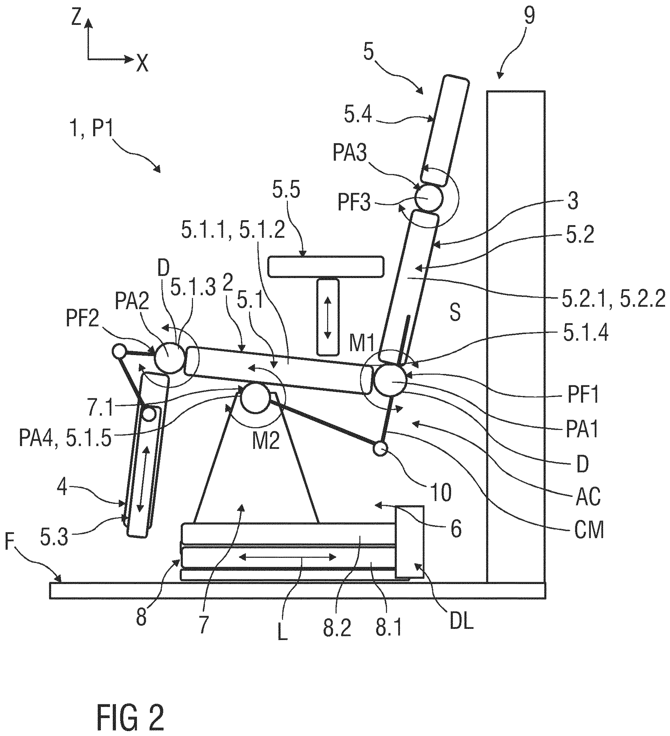

**Figure 2** shows a side view of a further embodiment of the seat 1 comprising the seat pan 2, the backrest 3 and a leg-rest 4, wherein the seat 1 is shown in the TTL position P1.

Further, the seat 1 comprises a seat support structure 5, such as a frame structure, which is connected to a base structure 6. The base structure 6 is configured to fix the seat 1 to a vehicle floor F. In the shown embodiment, the upholstery U is hidden. For example, the upholstery U comprises at least one of a seat pan upholstery part, a backrest upholstery part and/or a leg-rest upholstery part. Alternatively, the upholstery U is provided by a one-piece formed upholstered part. Further, the upholstery U can be at least partially attached to the seat support structure 5 by not further shown force-fitted, adhesive and/or form-fitted connection points.

The seat support structure 5 provides a seat pan frame 5.1 for the seat pan 2 with two lateral seat pan sides 5.1.1, 5.1.2, wherein only one of the two lateral seat pan sides 5.1.1, 5.1.2 is shown in **figure 2****.** Additionally, the seat pan frame 5.1, thereby the seat pan 2, comprise a front seat pan side 5.1.3 and a back seat pan side 5.1.4.

Further, the seat support structure 5 comprises a backrest frame 5.2 for the backrest 3 which is pivotable mounted to the back seat pan side 5.1.4 at a backrest pivot axis PA1 which is understood as an axis parallel to the transverse axis y.

Additionally, a leg-rest frame 5.3 for the leg-rest 4 is provided by the seat support structure 5, wherein the leg-rest frame 5.3 is pivotable mounted to the front seat pan side 5.1.3 at a leg-rest pivot axis PA2 which is understood as an axis parallel to the transverse axis y. In particular, the leg-rest 4 is configured as a calf rest. For example, the leg-rest 4 is one of an extendable leg-rest 4 comprising a main calf portion and an extendable foot-rest portion.

Moreover, the seat support structure 5 comprises a shoulder support and headrest frame 5.4 which is pivotable mounted to the backrest frame 5.2 at a shoulder support pivot axis PA3. For example, the backrest frame 5.2 and the shoulder support and headrest frame 5.4 are articulated with respect to each other by the shoulder support pivot axis PA3.

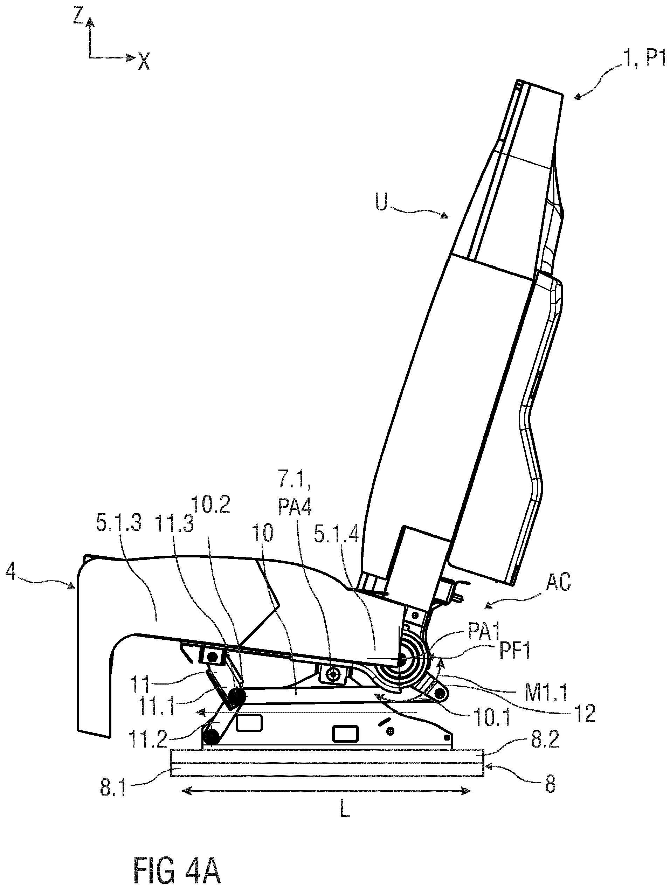

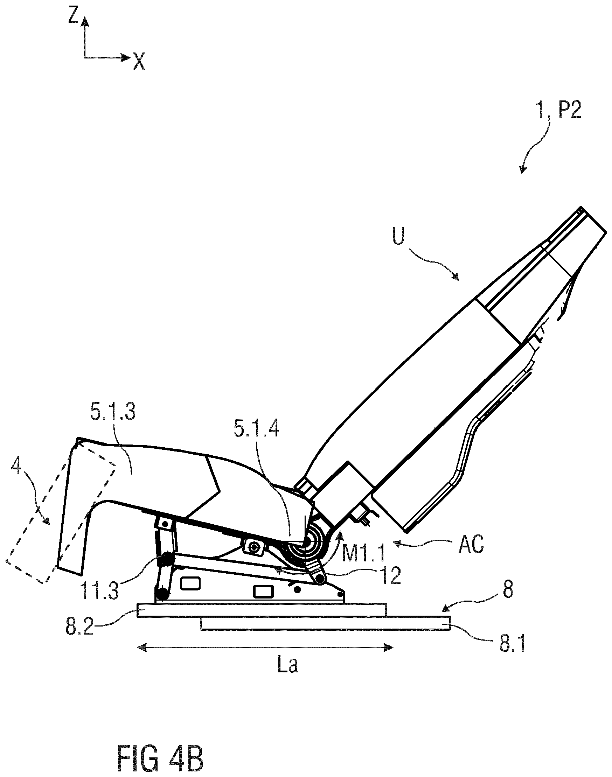

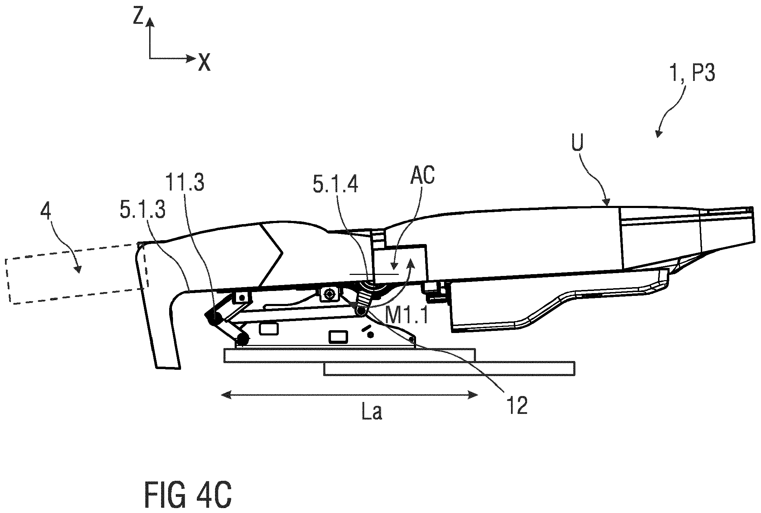

Hence, the seat pan frame 5.1, the backrest frame 5.2, the leg-rest frame 5.3 and the headrest frame 5.4 can be articulated with respect to each other such that the seat 1 is positionable into at least one of the TTL position P1, an inclined comfort position P2 shown in **figure 4B** and a sleeping position P3 shown in **figure 4C****.** Moreover, the seat support structure 5 can comprise an adjustable armrest 5.5 which can be lowered and raised with respect to the seat pan 2. Thereby, the armrest 5.5 can be lowered such that the armrest 5.5 and the seat pan 2 can be brought into a substantially flat surface position.

According to an exemplary embodiment, the backrest frame 5.2 is pivotable connected to the seat pan frame 5.1 by at least one of a backrest pivot fitting PF1 in the backrest pivot axis PA1. The leg-rest frame 5.3 is pivotable connected to the seat pan frame 5.1 by at least one of a leg-rest pivot fitting PF2 in the leg-rest pivot axis PA2. In particular, each of the pivot fittings PF1, PF2 is provided by a recliner mechanism and thereby comprising recliner fittings.

According to an embodiment, the pivot fittings PF1, PF2 of the backrest frame 5.2 and the leg-rest frame 5.3 are each configured as an electric-powered adjustable fitting. In particular, the seat 1 comprises an adjustment device D, coupled to the pivot fittings PF1, PF2. For example, each of the adjustment devices D comprises a drive unit.

In an exemplary embodiment, the adjustment device D is configured to continuously adjust a not further shown transmission rod coupling two pivot fittings PF1, each arranged on one lateral backrest side 5.2.1, 5.2.2.

The seat pan frame 5.1 is connected to the base structure 6 by a mounting element 7. For example, the mounting element 7 is a fixation bracket. Particularly, each of the lateral seat pan sides 5.1.1, 5.1.2 is fixedly connected to the base structure 6 by one mounting element 7. The base structure 6 provides a track assembly 8 for length adjustment L of the seat 1. Therefore, the track assembly 8 provides a length adjustment device DL for the seat 1.

The track assembly 8 provides a pair of tracks 8.1, 8.2 on each lateral side of the seat 1. The track assembly 8 comprises a lower track 8.1 fixedly coupled to the vehicle floor F. Further, the track assembly 8 comprises an upper track 8.2 which is slidable coupled to the lower track 8.1 for a sliding movement in a longitudinal direction of the vehicle.

In the shown embodiment, the mounting element 7 is fixedly and immovable coupled to the upper track 8.2. When the upper track 8.2 moves relative to the lower track 8.1, the mounting element 7 and so the seat 1 moves together with the upper track 8.2 in the longitudinal direction.

Further, the seat pan frame 5.1 is pivotable mounted to the track assembly 8 at a seat pan pivot axis PA4. In particular, the seat pan frame 5.1 is pivotable mounted to the mounting element 7 at a pivot bearing 7.1. In the shown embodiment, the pivot bearing 7.1 comprises a fixed seat pan pivot axis PA4 in a center portion 5.1.5 of the seat pan frame 5.1. For example, the center portion 5.1.5 is arranged at a same distance from the backrest pivot axis PA1 and to the leg-rest pivot axis PA2 such that a centered balance compensation point and weight compensation point can be provided. Alternatively, the seat pan pivot axis PA4 can be provided at a rear portion 5.1.6, as shown in the following figures, and/or a front portion of the seat pan frame 5.1.

Moreover, the seat 1 comprises a seat adjustment configuration AC for adjusting at least one of the seat pan 2, the backrest 3 and the track assembly 8. The adjustment configuration AC comprises a coupling mechanism CM configured to link, in particular mechanically, the seat pan frame 5.1 and the backrest frame 5.2 with respect to each other. In particular, the backrest pivot fitting PF1 is configured to interact with the coupling mechanism CM such that the seat pan frame 5.1 is being inclined about the seat pan pivot axis PA4 as the backrest frame 5.2 pivots about the backrest pivot axis PA1. In particular, when a passenger desires another position than the TTL position P1, the passenger can activate an adjustment of the seat 1, for example via a control unit and/or HMI. This adjustment initiates a pivot movement M1 of the backrest 3, whereas simultaneously the seat pan 2 is mechanically force-inclined via the coupling mechanism CM. Further, the seat pan frame 5.1 and the backrest pivot axis PA1, in particular the inclination thereof, are being adjusted relatively with respect to the track assembly 8. Thereby, the seat 1 moves away from a rear structure 9, such as a furniture wall or another seating unit. By moving away in the longitudinal direction, a space or gap S behind the seat 1 can be used to arrange the inclined backrest 3. Moreover, the backrest pivot axis PA1 is tilted by a pivot movement M2 of the seat pan 2 relatively with respect to the track assembly 8. In particular, the back seat pan side 5.1.4 of the seat pan frame 5.1 is tilted in a downward direction with respect to the track assembly 8 and afterwards in a more upward direction till the backrest frame 5.2 and the seat pan frame 5.1, and additionally the leg-rest frame 5.3, are being aligned in a horizontal manner providing a flat, horizontal sleeping surface.

In the shown embodiment, the coupling mechanism CM comprises a mechanical backrest linkage 10. The backrest linkage 10 is configured to mechanically couple the seat pan frame 5.1 to the backrest pivot axis PA1. In particular, the backrest linkage 10 is pivotable coupled to the backrest pivot fitting PF1. For example, the backrest linkage 10 is one of a mechanical hinge connection. For example, the backrest linkage 10 is configured to couple the pivot bearing 7.1, and thereby particularly the seat pan pivot axis PA4, to the backrest pivot axis PA1 and/or the backrest pivot fitting PF1. Via pivot movement M1 of the backrest frame 5.2, the pivot movement M2 of the seat pan frame 5.1 can be mechanically initiated by the backrest linkage 10.

Moreover, the seat support structure 5 can be brought into the substantially horizontal, sleeping position P3, whereas the backrest frame 5.2 and the seat pan frame 5.1 align substantially horizontally with each other. In particular, while inclination of the seat pan frame 5.1 about the seat pan pivot axis PA4 is performed, the backrest pivot fitting PF1, in particular its pivot axis PA1, is movable in a downward and upward direction relative to the track assembly 8, particularly with respect to the vertical axis z. Moreover, the backrest pivot axis PA1 is tilted by the pivot movement M2 of the seat pan 2 relatively with respect to the track assembly 8, whereas the upper track 8.2 is sliding simultaneously relatively to the lower track 8.1. In particular, the back seat pan side 5.1.4 of the seat pan frame 5.2 is tilted in a downward direction with respect to the track assembly 8 and afterwards in a more upward direction till the backrest frame 5.2 and the seat pan frame 5.1, and additionally the leg-rest frame 5.3, are being aligned in a horizontal manner providing a flat, horizontal sleeping surface to a passenger.

In an exemplary embodiment, the coupling mechanism CM is configured to initiate the pivot movement M2 of the seat pan frame 5.1 in both rotation directions with a reversion of rotation as the seat support structure 5 moves from the TTL position P1 to at least one of the inclined comfort position P2 and the sleeping position P3 or vice versa. In particular, the reversion of rotation is configured by the electric-powered continuously driven backrest pivot fitting PF1.

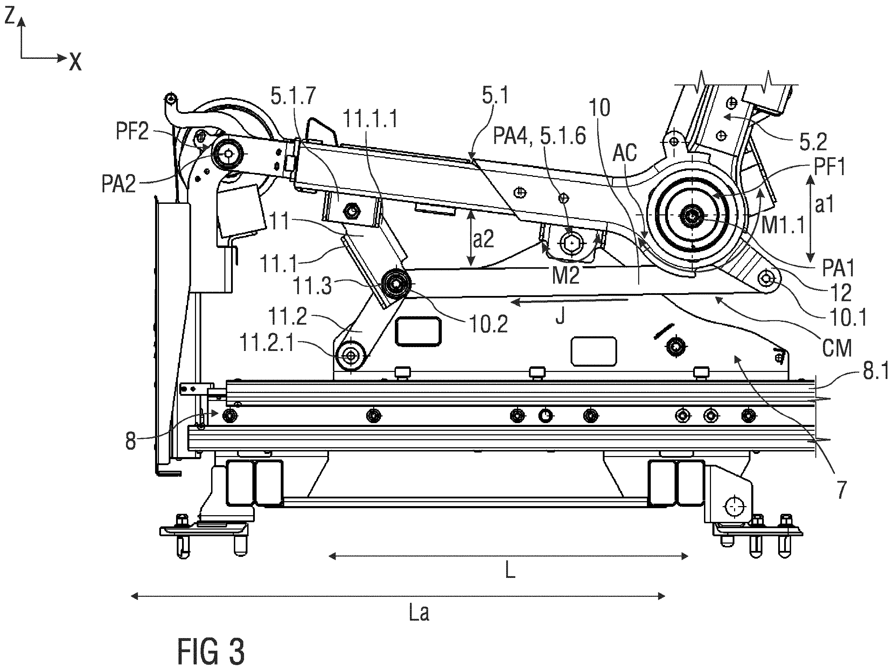

**Figure 3** shows a side view of a further embodiment of the track assembly 8 and the seat adjustment configuration AC. The seat pan frame 5.1 is fixed to the track assembly 8, in particular to the upper track 8.2, by the mounting element 7. The mounting element 7 comprises a substantially triangle shape. Thereby, the pivot bearing 7.1 providing the fixed seat pan pivot axis PA4 is arranged at a top of the triangle shaped mounting element 7. In particular, the pivot bearing 7.1 is mounted to the seat pan frame 5.1 at the rear portion 5.1.6 of the seat pan frame 5.1. Thereby, the seat pan pivot axis PA4 is substantially close to the backrest pivot axis PA1. Therefore, the pivot movement M2 of the seat pan frame 5.1 can be substantially transmitted to the backrest pivot axis PA1 with respect to track assembly 8.

Particularly, the backrest frame 5.2 can be adjusted, particularly inclined, about the pivot movement M1 in a given angle area a1. Further, the seat pan frame 5.1 can be adjusted, particularly inclined, about the mechanically initiated pivot movement M2 in a given angle area a2. The length adjustment L of the seat 1 is being adjusted in a given length area La. Thereby, the seat adjustment configuration AC is configured in such a manner that, when inclination of the backrest frame 5.2 is being adjusted, in particular within the given angle area a1, the inclination of the seat pan frame 5.1, in particular within the given angle area a2, and the backrest pivot axis PA1 are being adjusted simultaneously with respect to the track assembly 8. That means, that the track assembly 8, particularly the upper track 8.2 is being adjusted within the given length area La during the pivot movements M1, M2 of the backrest frame 5.2 and the seat pan frame 5.1.

In the shown embodiment, the coupling mechanism CM comprises a track linkage 11, exemplarily such as a hinge connection linkage, particularly mechanical hinge connection linkage. The track linkage 11 is configured to couple the seat pan frame 5.1 to the track assembly 8. Particularly, in the shown embodiment, the track linkage 11 comprises two linkage elements 11.1, 11.2. The linkage elements 11.1, 11.2 are one of an upper linkage element 11.1 and a lower linkage element 11.2, coupled to one another by a hinge connection point 11.3. One end portion 11.1.1 of the upper linkage element 11.1 is pivotable coupled to the seat pan frame 5.1. In particular, the upper linkage element 11.1 is pivotable mounted to a bracket 5.1.7, such as a hinge bracket, attached to a rear side of the seat pan frame 5.1. One end portion 11.2.1 of the lower linkage element 11.2 is pivotable mounted to the mounting element 7, so as to the track assembly 8, particularly the upper track 8.2. In another embodiment, the end portion 11.2.1 can be directly, pivotable coupled to the upper track 8.2.

Further, one end portion 10.1 of the backrest linkage 10 is pivotable coupled to the backrest pivot fitting PF1. Exemplarily, the backrest pivot fitting PF1 comprises a pivot extension link 12. In particular, the pivot extension link 12 is configured as a pivot linkage element, for example in form of a linkage bar, a rod or a fitting. The pivot extension link 12 is fixed to the backrest pivot fitting PF1 or is configured as extension part of the pivot fittings PF1. Thereby, the pivot extension link 12 follows the pivot movement M1 of the backrest pivot fittings PF1. That means that the pivot extension link 12 moves along a circular path M1.1 about the backrest pivot axis PA1. Another end portion 10.2 of the backrest linkage 10 is pivotable coupled with respect to the seat pan frame 5.1. Particularly, the end portion 10.2 is coupled to the mechanical track linkage 11 at the hinge connection point 11.3. As inclination of the backrest frame 5.2 is adjusted, a joint movement J of the track linkage 11 is mechanically initiated by the backrest linkage 10.

In the TTL position P1, the linkage elements 11.1, 11.2 are angled with respect to a direction of the backrest pivot fitting PF1. Thereby, the backrest linkage 10 is configured to move in a longitudinal forward direction, following the arrow showing the joint movement J. The backrest linkage 10 is pushing or pressing the lower linkage element 11.2, transmitting a pushing movement to the upper linkage element 11.1, such that the track linkage 11 is configured to move in the longitudinal forward direction. In particular, the linkage elements 11.1, 11.2 incline with respect to a direction away from the backrest pivot fitting PF1. Thereby, the front seat pan side 5.1.3 of the seat pan frame 5.1 is tilted downwards, relative to the track assembly 8, as the backrest frame 5.2 pivots from the TTL position P1 to one of the inclined comfort position P2 or the sleeping position P3. Conversely, when the backrest frame 5.2 moves from one of the inclined comfort position P2 or the sleeping position P3 to the TTL position P1, the front seat pan side 5.1.3 is raised upwards, away from the track assembly 8, whereas the back seat pan side 5.1.4 is tilted in a direction of the track assembly 8 at the seat pan pivot axis PA4. Thereby, the backrest linkage 10 is moved substantially backwards, in an opposite direction as shown by the arrow of the joint movement J, as the backrest frame 5.2 pivots back. That means that the backrest linkage 10 is pulling back the track linkage 11 into its initial position, particularly the TTL position P1 of the seat 1.

**Figures 4A to 4C** are each a side view of a further embodiment of the seat 1 in different positions P1, P2, P3. In particular, **figure 4A** shows the seat 1 in the TTL position P1, **figure 4B** shows the seat 1 in the inclined comfort position P2 and **figure 4C** shows the seat 1 in the sleeping position P3. The leg-rest 4 is shown in a substantially vertical direction with respect to the seat pan 2, whereas single positions of the leg-rest 4 according to the TTL position P1, the comfort position P2 and the sleeping position P3 is shown as dotted lines. Further, each seat 1 shown in the **figures 4A to 4C** comprises the upholstery U.

The seat 1 comprises the seat adjustment configuration AC comprising the coupling mechanism CM, such as a kinematic linkage, particularly a kinematic mechanical linkage between the backrest 3 and the seat pan 2.

The coupling mechanism CM is exemplarily a hinge connection linkage. In particular, the coupling mechanism CM is configured to interact with the backrest pivot fitting PF1 such that the seat pan frame 5.1 is being inclined about the seat pan pivot axis PA4 as the backrest frame 5.2 pivots about the backrest pivot axis PA1. In particular, the seat pan frame 5.1 and the backrest frame 5.2 are being adjusted relatively with respect to the track assembly 8, particularly to the upper track 8.2 which is slidable fixed to the lower track 8.1.

Further, the coupling mechanism CM comprises the backrest linkage 10 which is relatively coupled to the backrest frame 5.2 and relatively to the seat pan frame 5.1. In particular, in the shown embodiment, the backrest linkage 10 is one of an intermediate link between the backrest frame 5.2 and the seat pan frame 5.2. The coupling mechanism CM comprises the backrest pivot fitting PF1 arranged in the backrest pivot axis PA1 which is provided between the back seat pan side 5.1.4 and the backrest frame 5.1. Exemplarily, the backrest pivot fitting PF1 comprises the pivot extension link 12. In particular, the pivot extension link 12 is configured as a pivot linkage element, for example in form of a linkage bar, a rod or a fitting. The pivot extension link 12 is fixed to the backrest pivot fitting PF1 or is configured as extension part of the pivot fittings PF1. Thereby, the pivot extension link 12 follows the pivot movement M1 of the backrest pivot fittings PF1. That means that the pivot extension link 12 moves along the circular path M1.1 about the backrest pivot axis PA1. In the TTL position P1 of the seat 1, the pivot extension link 12 is in a most rearward position with respect to the backrest pivot fitting PF1. Thereby, the track linkage 11, particularly the linkage elements 11.1, 11.2 and the hinge connection point 11.3, is/are in a most rearward position with respect to the backrest pivot fitting PF1. In particular, the intermediate backrest linkage 10 is pivotable coupled with one end portion 10.1 to the pivot extension link 12 and with another end portion 10.2 to the track linkage 11. The track linkage 11 comprises the upper linkage element 11.1 and the lower linkage element 11.2, whereas the track linkage 11 coupled the seat pan frame 5.1 to the track assembly 8 via the mounting element 7. For example, in the shown embodiment, the end portion 10.2 of the intermediate backrest linkage 10 is coupled to the linkage elements 11.1, 11.2 at the hinge connection point 11.3.

As inclination of the backrest frame 5.2 is adjusted, the joint movement J of the track linkage 11 is mechanically initiated by the backrest linkage 10. Thereby, the backrest linkage 10 is configured to move in a longitudinal forward direction, following the arrow showing the joint movement J. The backrest linkage 10 is pushing or pressing the lower linkage element 11.2, transmitting a pushing movement to the upper linkage element 11.1, such that the track linkage 11 is configured to move in the longitudinal forward direction. Thereby, the front seat pan side 5.1.3 of the seat pan frame 5.1 is tilted downwards, relative to the track assembly 8, as the backrest frame 5.2 pivots from the TTL position P1 to one of the inclined comfort position P2 or the sleeping position P3. In the TTL position P1, the linkage elements 11.1, 11.2 are angled with respect towards a direction of the backrest pivot fitting PF1. In the inclined comfort position P2, the linkage elements 11.1, 11.2 are inclined with respect to a direction away from the backrest pivot fitting PF1, whereas the linkage elements 11.1, 11.2 are substantially aligned in the vertical axis z. Further movement of the linkage elements 11.1, 11.2 into the longitudinal direction, particularly away from the backrest pivot fitting PF1, causes the linkage elements 11.1, 11.2 to position them in an angled position relatively facing away from the backrest pivot fitting PF1.

In particular, as shown in **figure 4B****,** as inclination of the backrest frame 5.2 is adjusted, the pivot extension link 12 is moved along the circular path M1.1, pulling the intermediate backrest linkage 10 in a direction towards the track assembly 8. Thereby, the track linkage 11 is pushed into the position, in which they are substantially aligned along the vertical axis z. Thereby, the front seat pan side 5.1.3 raises, whereas the back seat pan side 5.1.4 so as the backrest pivot fitting PF1 tilt downwards. Further movement of the backrest frame 5.1 initiates the pivot extension link 12 to be adjusted to a more forward position with respect to the backrest pivot fitting PF1. Thereby, the movement of the linkage elements 11.1, 11.2 is caused by the intermediate backrest linkage 10, following the forward movement of the pivot extension link 12 along its circular path M1.1 while pushing against the hinge connection point 11.3. In the sleeping position P3, as shown in **figure 4C****,** the pivot extension link 12 is in a most forward position, whereas the hinge connection point 11.3 is in a most forward position with respect to the backrest pivot fitting PF1. Thereby, the front seat pan side 5.1.3 lowers about the seat pan pivot axis PA4, whereas the back seat pan side 5.1.4 raises about the seat pan pivot axis PA4.

### List of References

- 1: seat
- 2: seat pan
- 3: backrest
- 4: leg-rest
- 5: seat support structure
- 5.1: seat pan frame
- 5.1.1, 5.1.2: lateral seat pan sides
- 5.1.3: front seat pan side
- 5.1.4: back seat pan side
- 5.1.5: center portion
- 5.1.6: rear portion
- 5.1.7: bracket
- 5.2: backrest frame
- 5.2.1, 5.2.2: lateral backrest side
- 5.3: leg-rest frame
- 5.4: headrest frame
- 5.5: armrest
- 6: base structure
- 7: mounting element
- 7.1: pivot bearing
- 8: track assembly
- 8.1: lower track
- 8.2: upper track
- 9: rear structure
- 10: backrest linkage
- 10.1, 10.2: end portion
- 11: track linkage
- 11.1, 11.2: linkage element
- 11.1.1, 11.2.1: end portion
- 11.3: hinge connection point
- 12: pivot extension link

- AC: adjustment configuration
- CM: coupling mechanism
- D: adjustment device
- DL: length adjustment device
- F: floor
- J: joint movement
- L: length adjustment
- La: length area
- M1, M2: pivot movement
- M1.1: circular path
- P1, P2, P3: position
- PA1 to PA4: pivot axis
- PF1, PF2, PF3: pivot fitting
- S: gap
- U: upholstery
- a1, a2: angle area
- x: longitudinal axis
- y: transverse axis
- z: vertical axis

## Claims

1. A seat (1), in particular an aircraft seat, comprising at least
- a seat support structure (5) mounted to a track assembly (8),
- the track assembly (8) is configured to adjust the seat support structure (5) in a longitudinal direction,
the seat support structure (5) comprises at least one of
- a seat pan (2) having a seat pan frame (5.1) which is pivotable mounted to the track assembly (8) at a seat pan pivot axis (PA4),
- a backrest (3) having a backrest frame (5.2) which is pivotable mounted to the seat pan frame (5.1) at a backrest pivot axis (PA1), and
- a seat adjustment configuration (AC) for adjusting at least one of the seat pan (2), the backrest (3) and the track assembly (8),
wherein the adjustment configuration (AC) comprises a coupling mechanism (CM) configured to link the seat pan frame (5.1) and the backrest frame (5.2) with respect to each other, and at least a backrest pivot fitting (PF1) mounted at the backrest pivot axis (PA1) which is configured to interact with the coupling mechanism (CM) such that
- the seat pan frame (5.1) is being inclined about the seat pan pivot axis (PA4) as the backrest frame (5.2) pivots about the backrest pivot axis (PA1), and
- the seat pan frame (5.1) and the backrest pivot axis (PA1) are being adjusted relatively with respect to the track assembly (8).

2. The seat (1) according to claim 1, wherein the seat adjustment configuration (AC) is configured in such a manner that,
- when inclination of the backrest frame (5.2) is being adjusted, in particular in a given angle area (a1), the inclination of the seat pan frame (5.1), in particular in a given angle area (a2), and the backrest pivot axis (PA1) are being adjusted in one of a given length area (La) and vertical area relatively with respect to the track assembly (8).

3. A seat (1), in particular an aircraft seat, comprising at least
- a seat support structure (5) mounted to a track assembly (8),
- the track assembly (8) is configured to adjust the seat support structure (5) in a longitudinal direction,
- the seat support structure (5) comprises at least one of
- a seat pan (2) having a seat pan frame (5.1) which is pivotable mounted to the track assembly (8) at a seat pan pivot axis (PA4),
- a backrest (3) having a backrest frame (5.2) which is pivotable mounted to the seat pan frame (5.1) at a backrest pivot axis (PA1), and
- a seat adjustment configuration (AC) for adjusting at least one of the seat pan (2), the backrest (3) and the track assembly (8),
wherein the adjustment configuration (AC) comprises a coupling mechanism (CM) configured to link the seat pan frame (5.1) and the backrest frame (5.2) with respect to each other, and at least a backrest pivot fitting (PF1) mounted at the backrest pivot axis (PA1),
wherein the coupling mechanism (CM) is configured to initiate a pivot movement (M2) in both rotation directions with a reversion of rotation directions as the seat support structure (5) moves from a taxi, takeoff and landing position (P1) to at least one of an inclined comfort position (P2) and a sleeping position (P3) or vice versa.

4. The seat (1) according to any one of the preceding claims, wherein the seat pan frame (5.1) is pivotable mounted to the track assembly (8) by a pivot bearing (7.1) having a fixed seat pan pivot axis (PA4).

5. The seat (1) according to any one of the preceding claims, wherein the coupling mechanism (CM) comprises a mechanical track linkage (11) configured to mechanically couple the seat pan frame (5.1) to the track assembly (8).

6. The seat (1) according to claim 5, wherein each end portion (11.1.1, 11.2.1) of the mechanical track linkage (11) is pivotable coupled to one of the seat pan frame (5.1) and to the track assembly (8).

7. The seat (1) according to any one of the preceding claims, wherein the seat pan frame (5.1) is mechanically coupled to an upper track (8.2) of the track assembly (8) which is slidable fixed to a lower track (8.1) of the track assembly (8).

8. The seat (1) according to any one of the preceding claims, wherein the coupling mechanism (CM) comprises a mechanical backrest linkage (10) configured to mechanically couple the seat pan frame (5.1) with respect to the backrest pivot axis (PA1).

9. The seat (1) according to any one of the preceding claims, wherein the adjustment configuration (AC) comprises at least one backrest pivot fitting (PF1) configured as an electric-powered continuously adjustable fitting.

10. The seat (1) according to any one of the preceding claims, wherein the adjustment configuration (AC) comprises at least one transmission rod coupling at least one pivot fitting (PF1) of the backrest frame (5.2).

11. The seat (1) according to any one of the preceding claims, wherein the track assembly (8) comprises a length adjustment device (DL) configured as an electric-powered continuously length adjustable device.

12. The seat (1) according to claim 11, wherein
the length adjustment device (DL) and at least the backrest pivot fitting (PF1) are configured to simultaneously adjust the backrest (3) and a length position of the seat support structure (5).

13. The seat according to claim 11 or 12, wherein when the length position of the seat support structure (5) is being adjusted in a given length area (La), the inclination of the seat pan frame (5.1), in particular in a given angle area (a2) is being adjusted.

14. The seat (1) according to any one of the preceding claims, wherein a leg-rest (4) having a leg-rest frame (5.3) is pivotable mounted to the seat pan frame (5.1).

15. The seat (1) according to claim 14, wherein the leg-rest (4) is pivotable by a leg-rest pivot fitting (PF2) configured as an electric-powered continuously adjustable fitting.
